# FASCICULE DE BREVET EUROPEEN

(11) **EP 2 373 596 B1**
(45) Date de publication et mention de la délivrance du brevet: **13.08.2014**
(21) Numéro de dépôt: 09804294.8
(22) Date de dépôt: 15.12.2009
(51) Int. Cl.: C04B 35/628, C04B 41/45, C04B 41/91

(54) **PROCEDE DE TRAITEMENT DE FIBRES CERAMIQUES**
VERFAHREN ZUM VERARBEITEN KERAMISCHER FASERN
METHOD FOR PROCESSING CERAMIC FIBRES

(30) Priorité: 16.12.2008 FR 0858630
(43) Date de publication de la demande: 12.10.2011
(73) Titulaire: HERAKLES, 33185 Le Haillan (FR); Centre National de la Recherche Scientifique, 75016 Paris (FR)
(72) Inventeur: PLAISANTIN, Hervé, F-33600 Pessac (FR); PAILLER, René, F-33610 Cestas (FR); DELCAMP, Adrien, 33700 Merignac (FR); PHILIPPE, Eric, F-33700 Merignac (FR)
(74) Mandataire: Laïk, Eric
(86) Numéro de dépôt international: PCT/FR2009/052529
(87) Numéro de publication internationale: WO 2010/076475

(56) Documents cités:
- EP-A- 1 612 851
- WO-A1-2005/092610
- FR-A- 2 640 258

## Description

### Arrière-plan de l'invention

La présente invention concerne les fibres céramiques utilisées comme renfort dans la fabrication de matériau composite.

Les fibres céramiques présentent des propriétés mécaniques, telles que la contrainte à rupture et le module de Weibull, plus élevées que les céramiques monolithes correspondantes principalement en raison du faible volume sollicité et d'une population de défauts restreinte.

Toutefois, les propriétés mécaniques des fibres céramiques restent encore limitées par la présence de défauts liés aux techniques d'élaboration et/ou de manutention (fibrage, pyrolyse, frittage, frottement, etc.). Ces défauts, bien qu'essentiellement localisés en surface des fibres, ont un impact significatif sur le comportement mécanique de la fibre. En effet, la présence de tels défauts se traduit pour la fibre par une contrainte à rupture limitée, un module de Weibull relativement faible, et par une durée de vie sous air, sous charge et à température constante modérée trop courte pour des applications telles que les pièces chaudes des moteurs d'avion.

Le document US 6 579 833 décrit un procédé permettant de former par synthèse un revêtement de carbone à la surface de carbures métalliques tels que du carbure de silicium (SiC). Le document WO 2005/007566 décrit une application de ce procédé à la formation de carbone microporeux dont la porosité est contrôlée. Le procédé met en oeuvre un traitement thermique réactif à base de gaz halogénés générant une couche de carbone microporeux à la surface du carbure.

Ce procédé a été appliqué à des fibres céramiques (fibres ZMI, Hi-Nicalon®, Sylramic®, Tyranno®) comme décrits dans les documents "Carbide Derived Carbone (CDC) coatings for tyranno ZMI SiC Fibers", Y. Gogotsi et al., Ceram. Eng. & Sci. Proc., 24, 57-62 (2003) et "Mechanical properties of carbon and BN coated SiC fibers ", Y. Gogotsi et al., Ceram. Eng. & Sci. Proc., 24, 225-230 (2003) où la formation d'une couche de carbone en surface de fibre est observée mais sans amélioration des propriétés mécaniques (traction monotone à température ambiante).

Le traitement thermique de fibres céramiques avec un gaz halogéné a été en outre utilisé dans le document WO 2005/092610 en tant qu'étape intermédiaire d'un procédé de réalisation de revêtement sur fibres céramiques de type BAN (Bore-Aluminium-Azote), formé par exemple d'un mélange de BN et AI(O)N, dans le but d'améliorer la tenue à l'oxydation des composites céramiques.

Si des fibres céramiques munies d'un tel revêtement présentent une amélioration des propriétés mécaniques à température ambiante, leur tenue à l'oxydation ainsi que leur durée de vie sont encore insuffisantes.

EP1612851 propose un procédé où une surface de carbure est traitée par un gaz de type halogène, ainsi un revêtement de carbone est formé, ensuite le carbone est éliminé soit par un traitement d'oxydation, soit d'hydrogénation ou même par un traitement mécanique. Le problème à résoudre par EP1612851 est l'obtention d'une surface (et non d'une fibre) dénuée d'impuretés ou de fissures.

### Objet et résumé de l'invention

La présente invention a pour but de remédier à ces inconvénients en proposant un procédé permettant d'améliorer le comportement mécanique des fibres céramiques à base de carbure métallique et, par voie de conséquence, des matériaux composites dans lesquels elles sont utilisées comme renfort.

Ce but est atteint du fait que, conformément à l'invention, les fibres céramiques, notamment à base de carbure métallique tel que le carbure de silicium, sont soumises à:
- un premier traitement thermique en voie gazeuse réactive réalisé avec au moins un premier gaz réactif de type halogène formant, par transformation chimique de la fibre en surface, une couche superficielle constituée majoritairement de carbone, et
- un deuxième traitement thermique en voie gazeuse réactive réalisé avec au moins un deuxième gaz réactif éliminant la couche superficielle formée en surface lors de la transformation chimique.

L'utilisation de ces deux traitements thermiques avec des gaz réactifs différents et adaptés permet d'éliminer totalement la couche superficielle de matériau des fibres contenant les défauts les plus influents sur la limitation des propriétés mécaniques et de la durée de vie des fibres. La fibre résultante est de même nature chimique que la fibre initiale, y compris en surface, mais possède des propriétés mécaniques (en particulier en ce qui concerne la fatigue statique sous air) et de durées de vie accrues. Les fibres céramiques présentent, après les premier et deuxième traitements thermiques en voie gazeuse réactive, une durée de vie moyenne en fatigue statique sous air supérieure à 10 fois celle présentée avant lesdits traitements.

Le premier gaz réactif est choisi parmi au moins le dichlore (Cl₂), le chlorure d'hydrogène (HCl) et le difluor (F₂).

Le deuxième gaz réactif est choisi parmi au moins l'oxygène (O, O₂), l'ozone (O₃), l'ammoniac (NH₃), la vapeur d'eau et un mélange gazeux oxydant tel que l'air.

Selon un aspect particulier de l'invention, la couche superficielle formée lors du premier traitement thermique présente une épaisseur comprise entre 10 nm et 1 µm, voire 2 µm, selon le diamètre de la fibre.

Selon un autre aspect particulier de l'invention, les fibres céramiques sont des fibres à base carbure de silicium.

Les premier et second traitements thermiques sont réalisés de préférence à des températures inférieures à la température de stabilité thermique des fibres traitées.

Les premier et second traitements thermiques sont réalisés à la pression atmosphérique ou à une pression plus basse.

L'invention vise également un procédé de fabrication d'une préforme fibreuse comprenant la formation d'une structure fibreuse à partir de fibres céramiques à base de carbure métallique, caractérisé en ce que les fibres ont été traitées conformément au procédé de traitement de l'invention. Les fibres peuvent être traitées avant ou après la formation de la structure fibreuse.

Selon un aspect particulier du procédé de fabrication d'une préforme fibreuse de l'invention, on réalise après les premier et deuxième traitements thermiques en voie réactive, un troisième traitement thermique en voie gazeuse réactive de la texture fibreuse, ce troisième traitement étant réalisé avec au moins un gaz réactif de type halogène de manière à former sur les fibres de ladite texture fibreuse une couche superficielle constituée majoritairement de carbone poreux. Ce troisième traitement thermique est suivi de la formation d'une couche de carbone pyrolytique sur les fibres de la texture.

La couche de carbone poreux obtenue par le traitement thermique en voie gazeuse réactive est formée in-situ chaque fibre, c'est-à-dire sur toute la surface de la fibre même dans une zone de contact avec une autre fibre. On évite ainsi les pontages inter-fibres préjudiciables à la tenue mécanique du matériau que l'on observe habituellement avec les interphases de carbone pyrolytique formées par dépôt. La couche de carbone poreux ainsi formée est en outre adhérente aux fibres et présente une épaisseur homogène.

Cette couche de carbone poreux présente également les caractéristiques requises pour jouer le rôle d'interphase. En effet, dans cette couche, le carbone ne présente pas d'organisation structurale particulière. Il est microporeux et présente des surfaces spécifiques très élevées (de l'ordre de 1500m²/g) associées à des pores de très petites taille (diamètre des pores inférieurs au nanomètre). La couche de carbone microporeux est, par conséquent, apte à dévier les fissures entre les fibres et la matrice.

Par ailleurs, la couche de carbone microporeux constitue une bonne interface de liaison avec la couche de carbone pyrolytique déposée.

Les couches de carbone poreux et de carbone pyrolytique forment une interphase mixte de carbone qui permet d'accroître les caractéristiques mécaniques du matériau composite notamment en ce qui concerne la contrainte et la déformation à rupture.

Le gaz réactif est choisi parmi au moins le dichlore (Cl₂), le chlorure d'hydrogène (HCl) et le difluor (F₂).

Selon un aspect particulier de l'invention, la couche superficielle de carbone poreux formée présente une épaisseur comprise entre 2 nm et 500 nm.

L'invention concerne encore un procédé de fabrication d'une pièce en matériau composite comprenant la réalisation d'une préforme fibreuse conformément au procédé de fabrication d'une préforme fibreuse selon l'invention et la densification de la préforme.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- les figures 1A et 1C sont des vues schématiques en coupe d'une fibre SiC traitée conformément à une mise en oeuvre du procédé de l'invention ;
- les figures 2 et 3 montrent des mesures de durée de vie réalisées sur des fibres SiC avant et après traitement selon le procédé de l'invention.

### Description détaillée de modes de réalisation

Le procédé de la présente invention propose une solution pour éliminer la couche en surface des fibres céramiques contenant les défauts responsables de la limitation des propriétés mécaniques et de la durée de vie des fibres. Le procédé s'applique aux fibres céramiques à base de carbure métallique tel que le carbure de silicium. Le procédé de l'invention comprend deux traitements thermiques réalisés avec des espèces gazeuses réactives différentes.

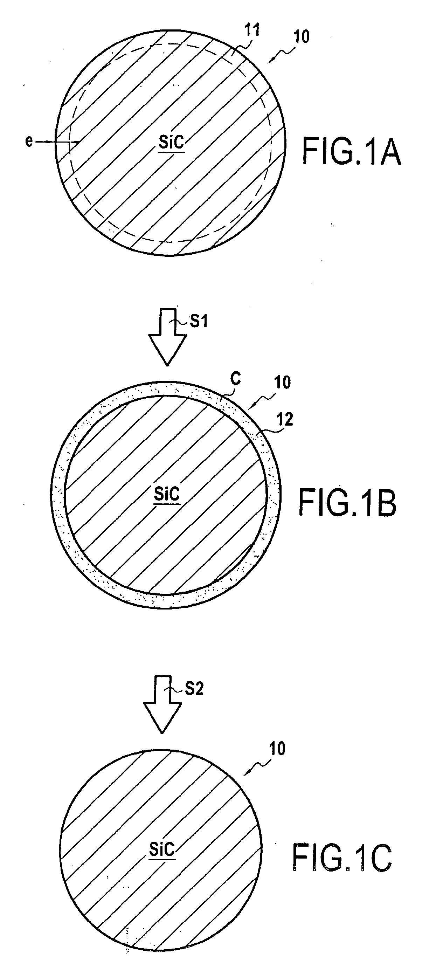

La figure 1A illustre très schématiquement une fibre SiC 10. Comme expliqué précédemment, la fibre SiC 10 comporte au voisinage de sa surface une zone 11 comprenant la plupart des défauts responsables de la limitation des propriétés mécaniques et de la durée de vie de la fibre. La zone 11 présente une épaisseur e qui varie selon la nature de la fibre et son diamètre moyen initial. Cette épaisseur est comprise typiquement entre 10 nm et 2 µm. L'épaisseur e de la zone 11 correspond à l'épaisseur de la couche superficielle à éliminer.

Le premier traitement thermique consiste à mettre la surface de la fibre céramique en contact avec un gaz ou mélange gazeux de type halogène, tel que du dichlore (Cl₂) par exemple, qui va transformer chimiquement le matériau céramique de la fibre en surface de manière à former une couche superficielle 12 d'un matériau différent constitué essentiellement de carbone (étape S1, figure 1B). Le composé halogéné présent dans le gaz réactif extrait le métal, et éventuellement l'oxygène, présents dans le matériau de la fibre en surface sous forme d'effluents gazeux qui sont évacués. De cette manière, il subsiste sur la fibre une couche superficielle ou résidu de surface composé majoritairement de carbone et qui présente une épaisseur au moins égale à celle de la zone 11.

Le deuxième traitement thermique consiste à mettre en contact la fibre ainsi transformée en surface avec un deuxième gaz ou mélange gazeux apte à attaquer sélectivement le matériau de la couche superficielle 12 et à le transformer en effluent gazeux qui est évacué (étape S2, figure 1C). La couche superficielle 12 étant essentiellement constituée de carbone, on peut notamment utiliser tout type de gaz apte à consommer le carbone, tel que de l'ammoniac, de l'oxygène, de l'ozone, de la vapeur d'eau ou même de l'air. Dans le cas de fibres Si-C ou Si-C-O, le résidu de surface carboné est éliminé sous forme de CO ou CO₂ avec l'oxygène et sous forme de HCN ou CH₄ avec de l'ammoniac.

La voie gazeuse réactive permet d'attaquer la céramique de la fibre et la couche superficielle issue de sa transformation chimique sans endommager le reste de la fibre, c'est-à-dire sans créer de nouveaux défauts.

Par ailleurs, l'utilisation d'au moins deux gaz réactifs de nature différente (transformation de la céramique et élimination du résidu transformé) permet d'éliminer totalement une portion de la fibre en surface, un seul gaz réactif ne pouvant à lui seul détruire sans résidu la céramique de la fibre.

Les fibres sont traitées dans une enceinte comprenant des entrées de gaz réactifs permettant de balayer les fibres successivement avec les gaz réactifs et au moins un conduit d'évacuation pour éliminer les effluents gazeux dégagés lors des réactions chimiques. Les gaz réactifs choisis (halogène et gaz oxydant) permettent de réaliser les traitements thermiques à des températures très inférieures à la température de stabilité thermique des fibres et d'éviter ainsi une dégradation thermique des fibres rédhibitoire pour les propriétés mécaniques des fibres. Par exemple, le choix du dichlore et de l'oxygène pour des fibres Si-C-O (étant thermostables jusqu'à environ 1000°C) permet de réaliser les premier et deuxième traitements thermiques du procédé de l'invention à des températures inférieures à 700°C.

Le premier traitement thermique réalisé avec le gaz ou le mélange gazeux halogéné permet de déterminer l'épaisseur de la couche superficielle qui doit être éliminée, c'est-à-dire l'épaisseur sur laquelle s'étendent les défauts responsables de la limitation des propriétés mécaniques et de la durée de vie de la fibre. En effet, le gaz réactif utilisé lors du deuxième traitement thermique élimine sélectivement le résidu carboné sans attaquer le reste de la fibre. En fonction de la nature du gaz réactif utilisé lors du premier traitement thermique, l'épaisseur du résidu carboné formé par transformation chimique de la fibre en surface peut être ajustée en contrôlant la température et/ou la durée du traitement.

La durée des premier et deuxième traitements thermiques est définie en fonction de la nature des gaz utilisés, en particulier en fonction de la réactivité des gaz avec le matériau des fibres, et de l'épaisseur que l'on souhaite retirer en surface de la fibre. A titre d'exemple, les premier et deuxième traitements peuvent être réalisés sur une durée d'une heure chacun.

Les fibres céramiques peuvent être traitées sous quelque forme que ce soit, par exemple fils, mèches, torons, câbles, tissus, feutres, mats et même préformes bi- ou tridimensionnelles.

Les fibres céramiques traitées selon le procédé de l'invention peut être avantageusement utilisées pour la réalisation de préformes fibreuses de pièce en matériau composite.

La fabrication de pièces en matériau composite renforcé par des fibres céramiques est bien connue. Elle comprend généralement la réalisation d'une préforme fibreuse céramique dont la forme est voisine de celle de la pièce à fabriquer et la densification de la préforme par une matrice.

La préforme fibreuse constitue le renfort de la pièce dont le rôle est essentiel vis-à-vis des propriétés mécaniques. La préforme est obtenue à partir de textures fibreuses en fibres céramiques qui se présentent sous forme de fils, câbles, tresses, tissus, feutres, etc. La mise en forme est réalisée par bobinage, tissage, empilage, et éventuellement aiguilletage de strates bidimensionnelles de tissu ou de nappes de câbles...

Les fibres céramiques de la préforme fibreuse sont traitées conformément au procédé de l'invention. Les fibres peuvent être traitées avant (c'est-à-dire au niveau de chaque texture fibreuse utilisée pour former la préforme) ou après la réalisation de la préforme.

Avant la densification de la préforme, les fibres de celle-ci peuvent être en outre munies d'une interphase mixte carbone microporeux/carbone pyrolytique. A cet effet, la texture fibreuse constituant la préforme est soumise à un troisième traitement thermique en voie gazeuse réactive similaire au premier traitement thermique, c'est-à-dire qui consiste à mettre la surface des fibres céramiques en contact avec un gaz ou mélange gazeux de type halogène, tel que du dichlore (Cl₂) par exemple, qui va transformer chimiquement le matériau céramique des fibres en surface de manière à former une couche superficielle d'un matériau différent constitué essentiellement de carbone microporeux. Le composé halogéné présent dans le gaz réactif extrait le silicium, et éventuellement l'oxygène, présents dans le matériau des fibres en surface sous forme d'effluents gazeux qui sont évacués. De cette manière, il subsiste sur les fibres une couche superficielle ou résidu de surface composé majoritairement de carbone poreux. Un tel traitement thermique est notamment décrit dans le document "Mechanical Properties of Carbon and BN Coated SiC Fibers", G. Belhau et al., Ceramic engineering and science proceedings [0196-6219], 2003, vol. 24, p. 225-230.

La texture fibreuse est traitée dans une enceinte comprenant des entrées de gaz réactifs permettant de balayer les fibres de la texture avec le ou les gaz réactifs et au moins un conduit d'évacuation pour éliminer les effluents gazeux dégagés lors des réactions chimiques. De même que pour le premier traitement thermique, on choisit des gaz réactifs permettant de réaliser les traitements thermiques à des températures très inférieures à la température de stabilité thermique des fibres comme le dichlore (Cl₂), le chlorure d'hydrogène (HCl) et le difluor (F₂).

En fonction de la nature du ou des gaz réactifs utilisés lors du traitement thermique, l'épaisseur de la couche de carbone poreux formée par transformation chimique de la fibre en surface peut être ajustée en contrôlant la température et/ou la durée du traitement.

Après ce troisième traitement thermique, chaque fibre de la structure comporte à sa surface une couche superficielle de carbone poreux d'une épaisseur homogène même au niveau des zones de contact inter-fibres. Après le traitement thermique, il ne subsiste plus de zone de pontage inter-fibres puisqu'une couche de carbone poreux est présente sur toute la surface des fibres.

Un dépôt d'une couche de carbone pyrolytique par infiltration chimique en phase gazeuse est ensuite réalisé sur les fibres de la texture. Un tel dépôt est bien connu. On pourra se référer par exemple aux documents US 5 026 604, US 4 752 503 et US 4 748 079. Pour rappel, ce dépôt peut être réalisé en mettant la texture fibreuse en contact avec une atmosphère renouvelée d'hydrocarbure (CH₄ par exemple) maintenue sous pression réduite, et en portant l'ensemble à une température d'au moins 850°C. L'épaisseur de la couche de carbone pyrolytique est déterminée par la durée de dépôt.

La densification du renfort fibreux peut être réalisée par voie liquide (imprégnation par une résine précurseur de la matrice et transformation par réticulation et pyrolyse, le processus pouvant être répété) ou par voie gazeuse (infiltration chimique en phase vapeur de la matrice).

L'invention s'applique notamment à la réalisation de pièces en matériau composite à matrice céramique (CMC) formées par un renfort fibreux en fibres céramiques densifié par une matrice céramique, notamment carbure, nitrure, oxyde réfractaire, etc. Des exemples typiques de tels matériaux CMC à fibres céramiques sont les matériaux SiC-SiC (renfort en fibres de carbure de silicium et matrice en carbure de silicium).

Afin de vérifier l'efficacité du procédé de traitement selon l'invention, les essais suivants ont été réalisés sur des fibres céramiques à base de carbure de silicium.

### Essai 1

Des fibres SiC Nicalon® de la société NIPPON CARBON Co., Ltd., ont subi les deux traitements thermiques en voie réactive suivants:
- un premier traitement de 30 minutes à 600°C sous dichlore à pression atmosphérique,
- un deuxième traitement de 45 minutes à 550 °C sous air à pression atmosphérique.

La contrainte à rupture moyenne des fibres en traction monofilamentaire à température ambiante est de 2347 MPa avant les traitements thermiques en voie réactive et de 4085 Mpa après ces traitements, soit une amélioration d'environ 74%.

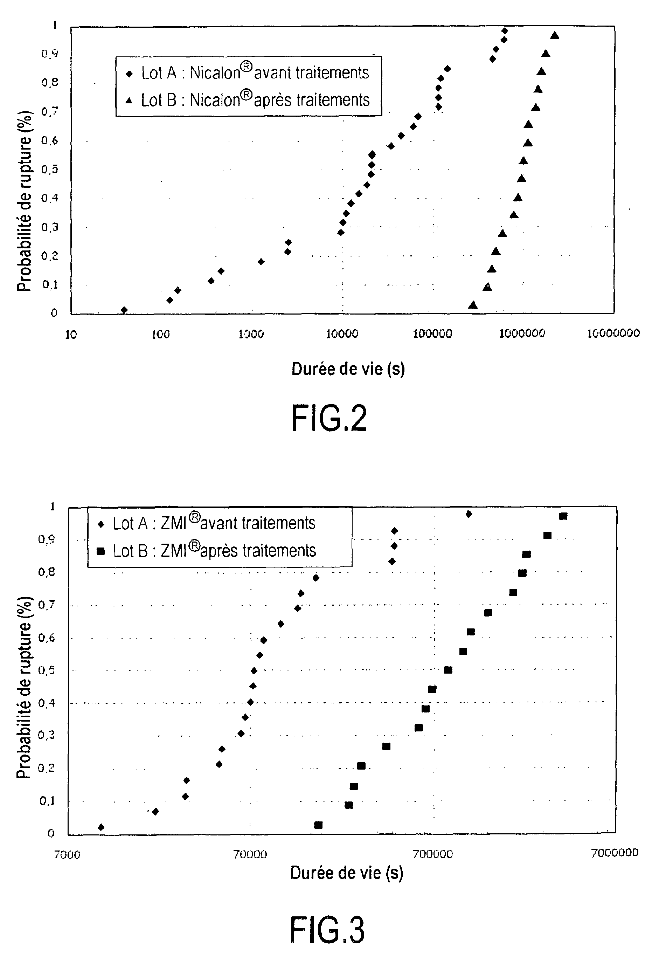

En outre, les fils secs ont été testés en fatigue statique sous air, à 600°C, et sous une contrainte appliquée de 400 MPa. Les résultats de ces tests sont illustrés à la figure 2.

La durée de vie moyenne (associée à une probabilité de rupture du fil de 50%) est de 6 heures avant les traitements thermiques en voie réactive (Lot A sur la figure 2) et de 250 heures après ces traitements (Lot B sur la figure 2). Par ailleurs, la dispersion de la durée de vie, ici définie comme la différence entre la valeur minimale et maximale de la durée de vie obtenue expérimentalement, est de 10000 avant les traitements thermiques en voie réactive (Lot A sur la figure 2) et de seulement 10 après ces traitements (Lot B sur la figure 2).

### Essai 2

Des fibres SiC Tyranno ZMI® de la société UBE Industries Co., Ltd. ont subi les deux traitements thermiques en voie réactive suivants:
- un premier traitement de 45 minutes à 625°C sous dichlore à pression atmosphérique,
- un deuxième traitement de 45 minutes à 550 °C sous air à pression atmosphérique.

La contrainte à rupture moyenne des fibres en traction monofilamentaire à température ambiante est de 3198 MPa avant les traitements thermiques en voie réactive et de 4013 Mpa après ces traitements, soit une amélioration supérieure à 25%.

En outre, les fils secs ont été testés en fatigue statique sous air, à 600°C, et sous une contrainte appliquée de 500 MPa. Les résultats de ces tests sont illustrés à la figure 3.

La durée de vie moyenne (associée à une probabilité de rupture du fil de 50%) est de 19 heures avant les traitements thermiques en voie réactive (Lot A sur la figure 3) et de 234 heures après ces traitements (Lot B sur la figure 3). Par ailleurs, la dispersion de la durée de vie, ici définie comme la différence entre la valeur minimale et maximale de la durée de vie obtenue expérimentalement, est de 100 avant les traitements thermiques en voie réactive (Lot A sur la figure 3) et de seulement 20 après ces traitements (Lot B sur la figure 3).

## Revendications

1. Procédé de traitement de fibres céramiques à base de carbure métallique comprenant un premier traitement thermique en voie gazeuse réactive réalisé avec au moins un premier gaz réactif de type halogène formant, par transformation chimique de la fibre en surface, une couche superficielle constituée majoritairement de carbone et un deuxième traitement thermique en voie gazeuse réactive réalisé avec au moins un deuxième gaz réactif éliminant la couche superficielle formée en surface lors de la transformation chimique, la fibre résultante après l'élimination de ladite couche superficielle étant en surface de même nature chimique que la fibre initiale.

2. Procédé selon la revendication 1, **caractérisé en ce que** le premier gaz réactif est choisi parmi au moins le dichlore, le difluor et le chlorure d'hydrogène.

3. Procédé selon la revendication 1 ou 2, **caractérisé en ce que** le deuxième gaz réactif est choisi parmi au moins l'oxygène, l'ozone, la vapeur d'eau, l'ammoniac et l'air.

4. Procédé selon l'une quelconque des revendications 1 à 3, **caractérisé en ce que** la couche superficielle formée lors du premier traitement thermique présente une épaisseur comprise entre 10 nm et 2 µm.

5. Procédé selon l'une quelconque des revendications 1 à 4, **caractérisé en ce que** les fibres céramiques sont des fibres à base carbure de silicium.

6. Procédé selon l'une quelconque des revendications 1 à 5, **caractérisé en ce que** les premier et second traitements thermiques sont réalisés à des températures inférieures à la température de stabilité thermique des fibres céramiques.

7. Procédé selon l'une quelconque des revendications 1 à 6, **caractérisé en ce que** les premier et second traitements thermiques sont réalisés à la pression atmosphérique.

8. Procédé selon l'une quelconque des revendications 1 à 7, **caractérisé en ce que** les fibres céramiques présentent, après lesdits premier et deuxième traitements thermiques en voie gazeuse réactive, une contrainte à rupture moyenne à température ambiante supérieure à 25 % de celle présentée avant lesdits traitements.

9. Procédé selon l'une quelconque des revendications 1 à 8, **caractérisé en ce que** les fibres céramiques présentent, après lesdits premier et deuxième traitements thermiques en voie gazeuse réactive, une durée de vie moyenne en fatigue statique sous air supérieure à 10 fois celle présentée avant lesdits traitements.

10. Procédé de fabrication d'une préforme fibreuse comprenant la formation d'une structure fibreuse à partir de fibres céramiques à base de carbure métallique, **caractérisé en ce que** les fibres ont été traitées conformément au procédé de traitement selon l'une quelconque des revendications 1 à 9.

11. Procédé selon la revendication 10, **caractérisé en ce que** les fibres sont traitées avant la formation de la structure fibreuse.

12. Procédé selon la revendication 10, **caractérisé en ce que** les fibres sont traitées après la formation de la structure fibreuse.

13. Procédé selon l'une quelconque des revendications 10 à 12, **caractérisé en ce qu'**il comprend en outre un troisième traitement thermique en voie gazeuse réactive de la texture fibreuse réalisé avec au moins un gaz réactif de type halogène de manière à former sur les fibres de ladite texture fibreuse une couche superficielle constituée majoritairement de carbone poreux et la formation d'une couche de carbone pyrolytique sur lesdites fibres.

14. Procédé selon la revendication 13, **caractérisé en ce que** la couche superficielle de carbone poreux présente une épaisseur comprise entre 2 nm et 500 nm.

15. Procédé de fabrication d'une pièce en matériau composite comprenant la réalisation d'une préforme fibreuse conformément au procédé selon l'une quelconque des revendications 10 à 14 et la densification de ladite préforme.

## Patentansprüche

1. Verfahren zur Behandlung von Keramikfasern auf Grundlage von Metallcarbid, umfassend eine erste Wärmebehandlung unter Einsatz reaktionsfähiger Gase, welche mit mindestens einem ersten reaktionsfähigen Gas vom Typ Halogen durchgeführt wird, wobei durch eine chemische Umwandlung an der Oberfläche der Faser eine oberflächliche Schicht gebildet wird, die überwiegend aus Kohlenstoff besteht, sowie umfassend eine zweite Wärmebehandlung unter Einsatz reaktionsfähiger Gase, welche mit mindestens einem zweiten reaktionsfähigen Gas durchgeführt wird, wobei die oberflächliche Schicht, welche bei der chemischen Umwandlung gebildet wurde, entfernt wird und wobei die Faser, die nach dem Entfernen der oberflächlichen Schicht erhalten wird, an ihrer Oberfläche dieselbe chemische Beschaffenheit wie die Ausgangsfaser aufweist.

2. Verfahren nach Anspruch 1, **dadurch gekennzeichnet, dass** das erste reaktionsfähige Gas aus mindestens molekularem Chlor, molekularem Fluor und Chlorwasserstoff ausgewählt wird.

3. Verfahren nach Anspruch 1 oder 2, **dadurch gekennzeichnet, dass** das zweite reaktionsfähige Gas aus mindestens Sauerstoff, Ozon, Wasserdampf, Ammoniak und Luft ausgewählt wird.

4. Verfahren nach einem beliebigen der Ansprüche 1 bis 3, **dadurch gekennzeichnet, dass** die oberflächliche Schicht, welche bei der ersten Wärmebehandlung gebildet wird, eine Dicke im Bereich von 10 nm und 2 µm aufweist.

5. Verfahren nach einem beliebigen der Ansprüche 1 bis 4, **dadurch gekennzeichnet, dass** es sich bei den Keramikfasern um Fasern auf Grundlage von Siliciumcarbid handelt.

6. Verfahren nach einem beliebigen der Ansprüche 1 bis 5, **dadurch gekennzeichnet, dass** die erste und die zweite Wärmebehandlung bei Temperaturen erfolgen, die niedriger als die Temperatur der thermischen Stabilität der Keramikfasern ist.

7. Verfahren nach einem beliebigen der Ansprüche 1 bis 6, **dadurch gekennzeichnet, dass** die erste und die zweite Wärmebehandlung bei Atmosphärendruck durchgeführt werden.

8. Verfahren nach einem beliebigen der Ansprüche 1 bis 7, **dadurch gekennzeichnet, dass** die Keramikfasern, nachdem sie die erste und die zweite Wärmebehandlung unter Einsatz reaktionsfähiger Gase erfahren haben, bei Raumtemperatur eine mittlere Zugfestigkeit aufweisen, welche den entsprechenden Wert vor diesen Behandlungen um 25 % übertrifft.

9. Verfahren nach einem beliebigen der Ansprüche 1 bis 8, **dadurch gekennzeichnet, dass** die Keramikfasern, nachdem sie die erste und die zweite Wärmebehandlung unter Einsatz reaktionsfähiger Gase erfahren haben, eine durch statische Ermüdung bedingte mittlere Lebensdauer aufweisen, welche den entsprechenden Wert vor diesen Behandlungen das 10-fache übertrifft.

10. Verfahren zur Herstellung einer faserartigen Vorform, welches die Bildung einer faserartigen Struktur aus Keramikfasern auf Grundlage von Metallcarbid umfasst, **dadurch gekennzeichnet, dass** die Fasern gemäß dem Behandlungsverfahren nach einem beliebigen der Ansprüche 1 bis 9 hergestellt wurden.

11. Verfahren nach Anspruch 10, **dadurch gekennzeichnet, dass** die Fasern vor der Bildung der faserartigen Struktur behandelt wurden.

12. Verfahren nach Anspruch 10, **dadurch gekennzeichnet, dass** die Fasern nach der Bildung der faserartigen Struktur behandelt wurden.

13. Verfahren nach einem beliebigen der Ansprüche 10 bis 12, **dadurch gekennzeichnet, dass** es darüber hinaus eine dritte Wärmebehandlung der hergestellten faserartigen Struktur unter Einsatz reaktionsfähiger Gase umfasst, wobei diese mit mindestens einem reaktionsfähigen Gas vom Typ Halogen derart erfolgt, dass sich auf den Fasern der faserartigen Struktur eine oberflächliche Schicht bildet, die überwiegend aus porösem Kohlenstoff besteht, wobei es weiterhin die Bildung einer Schicht aus Pyrokohlenstoff auf den Fasern umfasst.

14. Verfahren nach Anspruch 13, **dadurch gekennzeichnet, dass** die oberflächliche Schicht aus porösem Kohlenstoff eine Dicke im Bereich von 2 nm bis 500 nm aufweist.

15. Verfahren zur Herstellung eines Bauteils aus Verbundwerkstoff, umfassend die Herstellung einer faserartigen Vorform gemäß dem Verfahren nach einem beliebigen der Ansprüche 10 bis 14 sowie die Verdichtung der Vorform.

## Claims

1. A method of treating ceramic fibers based on metal carbide, the method comprising a first reagent gas heat treatment performed with at least one first reagent gas of the halogen type that chemically transforms the surface of the fiber to obtain a surface layer constituted mainly of carbon, and a second reagent gas heat treatment performed with at least one second reagent gas that eliminates the surface layer formed during the chemical transformation, the resulting fiber after elimination of said surface layer being on its surface of the same chemical nature as the initial fiber.

2. A method according to claim 1, **characterized in that** the first reagent gas is selected from at least: dichlorine, difluorine, and hydrogen chloride.

3. A method according to claim 1 or claim 2, **characterized in that** the second reagent gas is selected from at least: oxygen, ozone, steam, ammonia, and air.

4. A method according to any one of claims 1 to 3, **characterized in that** the surface layer formed during the first heat treatment presents thickness lying in the range 10 nm to 2 µm.

5. A method according to any one of claims 1 to 4, **characterized in that** the ceramic fibers are fibers based on silicon carbide.

6. A method according to any one of claims 1 to 5, **characterized in that** the first and second heat treatments are performed at the temperatures lower than the thermal stability temperature of the ceramic fibers.

7. A method according to any one of claims 1 to 6, **characterized in that** the first and second heat treatments are performed at atmospheric pressure.

8. A method according to any one of claims 1 to 7, **characterized in that**, after said first and second reagent gas heat treatments, the ceramic fibers present a mean breaking stress at ambient temperature that is more than 25% greater than that presented before said treatments.

9. A method according to any one of claims 1 to 8, **characterized in that**, after said first and second reagent gas heat treatments, the ceramic fibers present a static fatigue mean lifetime in air that is more than 10 times that presented before said treatments.

10. A method of fabricating a fiber preform comprising forming a fiber structure from ceramic fibers based on metallic carbide, the method being **characterized in that** the fibers are treated in accordance with the treatment method according to any one of claims 1 to 9.

11. A method according to claim 10, **characterized in that** the fibers are treated before forming the fiber structure.

12. A method according to claim 10, **characterized in that** the fibers are treated after forming the fiber structure.

13. A method according to any one of claims 10 to 12, **characterized in that** it further comprises performing a third reagent gas heat treatment on the fiber structure by using at least one reagent gas of the halogen type so as to form on the fibers of said fiber structure a surface layer constituted mainly of porous carbon, and forming a layer of pyrolytic carbon on said fibers.

14. A method according to claim 13, **characterized in that** the surface layer of porous carbon presents thickness lying in the range 2 nm to 500 nm.

15. A method of fabricating a composite material part, the method comprising making a fiber preform in accordance with the method of any one of claims 10 to 14, and densifying said preform.
